Europäisches Patentamt

European Patent Office

Office européen des brevets

(11) Veröffentlichungsnummer: **0 086 269**
**A1**

(12) # EUROPÄISCHE PATENTANMELDUNG

(21) Anmeldenummer: 82111328.9

(22) Anmeldetag: 07.12.82

(51) Int. Cl.³: **H 04 B 7/08**

(30) Priorität: **12.02.82 DE 3205014**

(43) Veröffentlichungstag der Anmeldung: **24.08.83**
**Patentblatt 83/34**

(84) Benannte Vertragsstaaten: **DE FR GB NL**

(71) Anmelder: **AEG - TELEFUNKEN Nachrichtentechnik GmbH, Gerberstrasse 33, D-7150 Backnang (DE)**

(72) Erfinder: **Schlotterbeck, Willi, Dipl.-Ing., Häfnersweg 66/1, D-7150 Backnang (DE)**

(74) Vertreter: **Schickle, Gerhard, Dipl.-Ing. et al, AEG-TELEFUNKEN Nachrichtentechnik GmbH K1 E7 Gerberstrasse 33, D-7150 Backnang (DE)**

(54) **Phasenkorrekturschaltung in einer Diversity-Empfangsanlage.**

(57) Die Erfindung betrifft eine Phasenkorrekturschaltung, die in jedem Kanal einer Diversity-Empfangsanlage einge-setzt ist. Diese Schaltung besteht aus zwei Signalpfaden mit jeweils einem Phasendetektor (1, 2), einem Tiefpaß (3, 4) und einem regelbaren Dämpfungsglied (5, 6), wobei vor den Phasendetektor in einem Signalpfad noch ein 90°-Phasen-schieber (8) geschaltet ist. Das Empfangssignal (E₁) des jeweiligen Diversity-Kanals ist auch an die Eingänge der beiden Dämpfungsglieder geführt, und die Steuereingänge der Phasendetektoren sind gemeinsam mit dem Ausgang des Kombinators, der die Ausgangssignale der Dämpfungs-glieder addiert, verbunden.

-1-

AEG-TELEFUNKEN                              PTL-BK/Th/ma
NACHRICHTENTECHNIK GmbH                     BK 81/54
Gerberstr. 33
D-7150 Backnang


## Phasenkorrekturschaltung in einer Diversity-Empfangsanlage

Die vorliegende Erfindung betrifft eine Phasenkorrekturschaltung, die in jedem der in einem Kombinator zusammengefaßten Kanäle einer Diversity-Empfangsanlage eingesetzt ist.

Um eine kohärente Kombination der von den verschiedenen Diversity-Kanälen empfangenen Signale zu ermöglichen, sind die in den Kanälen auftretenden unterschiedlichen Phasenbedingungen auszugleichen.

Dazu werden gemäß der DE-AS 23 25 367 Phasenkorrekturschaltungen verwendet, bei denen eine erste Zwischenfrequenz mit einer zweiten intern gewonnenen Zwischenfrequenz in eine dritte Zwischenfrequenz umgesetzt wird, die ihrerseits wieder mit der ersten Zwischenfrequenz gemischt wird. Um das jeweils interessierende Mischprodukt von unerwünschten Nebenwellen zu befreien, ist ein erheblicher Filteraufwand nötig, insbesondere dann, wenn die Modulation systembedingt auf der ersten Zwischenfrequenz erfolgen soll.

Der Erfindung liegt daher die Aufgabe zugrunde, eine Phasen-

0086269
BK 81/54

korrekturschaltung der eingangs genannten Art anzugeben, die
mit einem minimalen Aufwand an Filtern auskommt, um eine phasenrichtige Addition der Signale mehrerer Diversity-Kanäle zu
ermöglichen mit dem Ziel, ein optimales Signal-Störleistungsverhältnis amAusgang des Kombinators zu erhalten.

Diese Aufgabe wird erfindungsgemäß dadurch gelöst, daß die
Phasenkorrekturschaltung aus zwei Signalpfaden mit jeweils
einem Phasendetektor, einem Tiefpaß, der nur den hochfrequenzfreien Anteil des Phasendetektor-Ausgangssignals durchläßt, und einem regelbaren Dämpfungsglied besteht, wobei dem
einen Pfad direkt und dem anderen Pfad über einen 90°-Phasenschieber das Empfangssignal des Kanals zugeführt ist, daß
das Eingangssignal eines jeden Pfades auch an den Eingang
des jeweiligen Dämpfungsgliedes gelegt ist und daß die Stei-
Steuereingänge der Phasendetektoren gemeinsam mit dem Ausgang des Kombinators, der die Ausgangssignale der Dämpfungsglieder addiert, verbunden sind.

Zweckmäßige Ausführungen der Erfindung gehen aus den Unteransprüchen hervor.

Die vorliegende Erfindung hat den Vorteil, daß nur von einer
einzigen Zwischenfrequenz Gebrauch gemacht wird. Damit ist
nur eine geringe Anzahl von Filtern nötig, die sich auf eine einzige Stelle im Basisbandbereich konzentrieren, wo eine raumsparende und kostengünstige Realisierung, z.B. durch
aktive Filter mit IC-Bausteinen, möglich wird.

Anhand eines in der Zeichnung dargestellten Ausführungsbeispiels wird nun die Erfindung näher beschrieben. Es zeigen:

Fig. 1 eine Phasenkorrekturschaltung und
Fig. 2 eine Diversity-Empfangsanlage, in der die erfindungsgemäßen Phasenkorrekturschaltungen eingesetzt
sind.

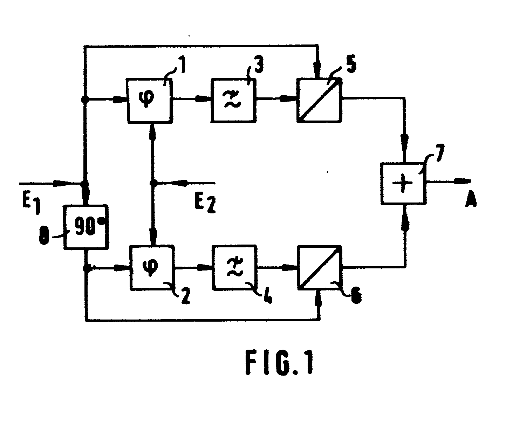

An der in der Fig. 1 dargestellten Phasenkorrekturschaltung soll zunächst deren Funktionsweise erläutert werden. Die Schaltung besteht aus zwei Signalpfaden, die jeweils einen Phasendiskriminator 1 bzw. 2, einen Tiefpaß 3 bzw. 4, und ein mit seinem Steuersignaleingang an den Ausgang des Tiefpaßausganges angeschlossenes, regelbares Dämpfungsglied 5 bzw. 6 enthalten. Die Ausgänge der Dämpfungsglieder am Ende der beiden Signalpfade sind einem Addierer 7 zugeführt. Der eine Signalpfad erhält das empfangene Eingangssignal $E_1$ di- rekt und der andere Signalpfad über einen 90°-Phasenschieber 8. Ebenso erhält der Eingang des dem einen Signalpfad zugeordneten Dämpfungsgliedes das Signal $E_1$ direkt und der Eingang des dem anderen Signalpfad zugeordneten Dämpfungsgliedes das um 90° phasenverschobene Signal $E_1$.

Das Eingangssignal $E_1$ hat die Form $U_1 \cos(\omega t + \varphi)$ und ein zweites Eingangssignal $E_2$, das den Steuereingängen der beiden Phasendetektoren 1 und 2 gemeinsam zugeleitet ist, hat die Form $U_2 (\cos\omega t)$. Beide Signale besitzen also die gleiche Frequenz, unterscheiden sich aber in ihrer Phase und Amplitude. Der Phasendetektor 1 liefert dann folgendes Ausgangs- signal:

$$U_1\cos(\omega t+\varphi)\; U_2\cos\omega t = \frac{1}{2} U_1 U_2 \cos(2\omega t+\varphi)+ \frac{1}{2} U_1 U_2 \cos\varphi \quad (1)$$

Über den Tiefpaß 3 gelangt nur die von $U_1$, $U_2$ und $\varphi$ abhängi- ge Signalkomponente $\frac{1}{2} U_1 U_2 \cos\varphi$ und bei rauschbehafteten Signalen zusätzlich ein vernachlässigbarer, durch die Grenzfrequenz des Tiefpasses bestimmter Rauschanteil als Steuerspannung an das elektronisch relgebare Dämpfungsglied 5, mit dem das Eingangssignal abgeschwächt wird. Damit ist das Aus- gangssignal des Dämpfungsgliedes 5

$$\frac{1}{2} U_1 U_2 \cos\varphi\; U_1 \cos(\omega t+\varphi) = \frac{1}{4} U_1^2 U_2 [\cos(\omega t+2\varphi)+\cos\omega t] \quad (2)$$

Entsprechend ergibt sich im anderen Pfad wegen des 90°-Phasenschiebers 8

$$U_1 \sin \cdot (\omega t + \varphi) \, U_2 \cos \omega t = \frac{1}{2} U_1 U_2 \sin (2 \omega t + \varphi) + \frac{1}{2} U_1 U_2 \sin \varphi \quad (3)$$

am Ausgang des Phasendetektors 2 und $\frac{1}{2} U_1 U_2 \sin \varphi$ nach dem Tiefpaß 4 als Steuerspannung für das elektronische Dämpfungsglied 6. Dessen Ausgangssignal ist dann

$$\frac{1}{2} U_1 U_2 \sin \varphi \, U_1 \sin(\omega t + \varphi) = \frac{1}{4} U_1^2 U_2 \left[ \cos \omega t - \cos (\omega t + 2 \varphi) \right] (4)$$

Durch Summierung von (2) und (4) ergibt sich

$$\frac{1}{2} U_1^2 U_2 \cos \omega t \qquad\qquad (5)$$

Dieses am Ausgang des Summierers 7 vorliegende Signal A hat die Phase des Signal $E_2$ am Steuereingang der Phasendetektoren 1 und 2 und hängt darüberhinaus nur noch von $U_1$ ab, wenn $U_2$ konstant gehalten wird. Damit lassen sich aber der Ausgang des Addierers 7 und die Steuereingänge der Phasendetektoren 1 und 2 miteinander verbinden.

Weitere Schaltungen dieser in Fig. 1 dargestellten Art, von denen je eine einem Diversity-Kanal zugeordnet ist, können daher an einen gemeinsamen Addierer angeschlossen werden. Auf diese Weise erhalten Diversity-Signale, die auf dem Übertragungsweg unterschiedliche Phasenverschiebungen gegeneinander erlitten haben, eine einheitliche Phasenlage.

Darüberhinaus kann die elektronische Dämpfungsregelung in den einzelnen Diversity-Pfaden in an sich bekannter Weise zur Gewichtung der verschiedenen Signale herangezogen werden mit dem Ziel, trotz unkorrelierter Fadings in den einzelnen Diversity-Kanälen einen stets optimalen Signal-Störleistungsabstand zu erhalten.

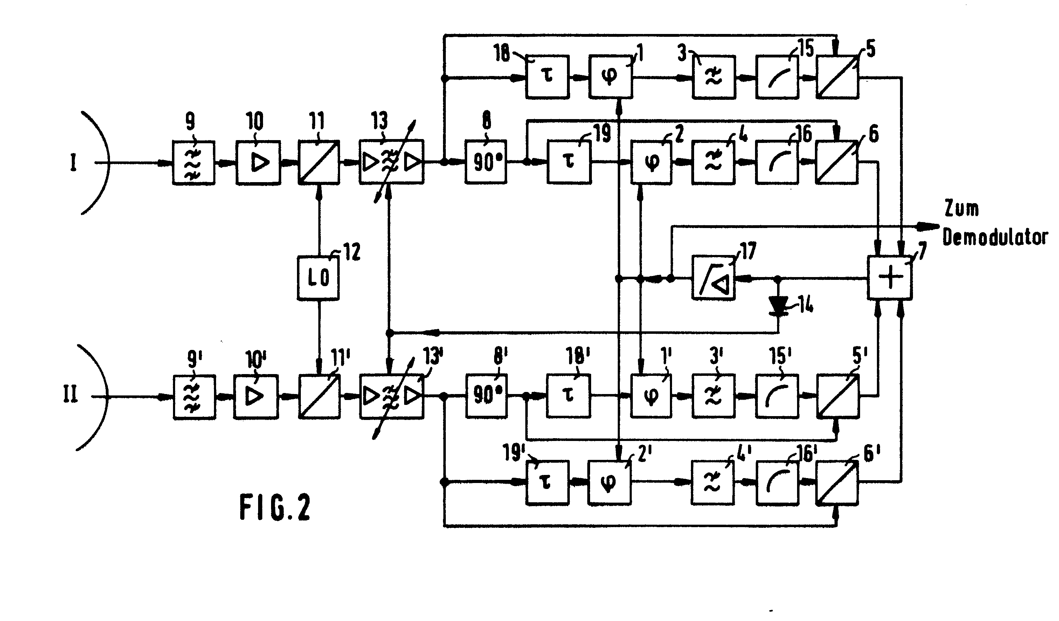

Eine vollständige Schaltung mit zwei Diversity-Kanälen zeigt
die Fig. 2, wobei in jedem Empfangszweig eine oben beschriebene Phasenkorrekturschaltung eingefügt ist, die beide an
einen gemeinsamen Addierer 7 angeschlossen sind.

Über die Antenne I gelangt im ersten Diversity-Kanal ein
Signal über ein Bandpaßfilter 9 und einen Empfangsverstärker 10 an einen Empfangsmischer 11, der von einem Empfangs-
Oszillator 12 angesteuert die Umsetzung des RF-Signals in
die Zwischenfrequenzlage bewirkt. Im selektiven ZF-Verstärker 13 wird das Signal auf einen für den Kombinator geeigneten Pegel angehoben.

Entsprechend ist der Empfangszug für einen zweiten Diversity-Kanal aufgebaut mit einer Antenne II, einem Bandpaßfilter 9', einem Empfangsverstärker 10', einem Mischer 11'
und einem ZF-Verstärker 13'.

Die ZF-Verstärker 13 und 13' werden über eine vom Ausgangssignal des Addierers 7 durch eine Diode 14 abgeleitete Gleichspannung bezüglich ihrer Verstärkung geregelt;
d.h. jeweils das größere Empfangssignal bestimmt im wesentlichen die Verstärkung beider Empfangszüge. Die beiden
Phasenregelschleifen werden somit mit unterschiedlichen
Signalpegeln angesteuert, was zu einer zusätzlichen Gewichtung, abhängig von der Steuerkennlinie der elektronischen Dämpfungsglieder 5, 6, 5' und 6', führt, für die
zweckmäßigerweise Ringmischer verwendet werden.

Den Dämpfungsgliedern 5, 6, 5' und 6' sind Netzwerke 15, 16,
15' und 16' vorgeschaltet, die die Steuerkennlinie der Dämpfungsglieder so beeinflussen, daß deren Dämpfungsfaktoren
lineare Funktionen der Steuerspannungen werden. Damit ergibt
sich eine optimale Signalkombination.

Hinter den Addierer 7 ist ein Verstärker 17 geschaltet, der das Ausgangssignal des Kombinators auf einen Maximalwert begrenzt. Da dieser im allgemeinen eine nicht zu vernachlässigende Laufzeit $\tau$ besitzt, sind zur Wahrung der Phasenbeziehungen der beiden Eingangssignale eines jeden Phasendetektors Verzögerungsglieder 18, 19, 18' und 19' mit derselben Laufzeit $\tau$ vor die Phasendetektoren gesetzt.

Die hier beschriebene Diversity-Empfangsanlage kann um weitere Kanäle ergänzt werden, die alle den gleichen in Fig. 2 gezeigten Aufbau besitzen.

. . . . . . . . . . . . . . . . . .

AEG-TELEFUNKEN                                    PTL-BK/Th/ma
NACHRICHTENTECHNIK GmbH                           BK 81/54
Gerberstr. 33
D-7150 Backnang


<u>Patentansprüche</u>

1. Phasenkorrekturschaltung, die in jedem der in einem Kombinator zusammengefaßten Kanäle einer Diversity-Empfangsanlage eingesetzt ist, <u>dadurch gekennzeichnet,</u> daß die Phasenkorrekturschaltung aus zwei Signalpfaden mit jeweils
   einem Phasendetektor (1, 2, 1', 2') einem Tiefpaß (3, 4,
   3', 4'), der nur den hochfrequenzfreien Anteil des Phasendetektor-Ausgangssignals durchläßt, und einem regelbaren Dämpfungsglied (5, 6, 5', 6') besteht, wobei dem
   einen Pfad direkt und dem anderen Pfad über einen 90°-
   Phasenschieber (8, 8') das Empfangssignal ($E_1$) des Kanals zugeführt ist, daß das Eingangssignal eines jeden
   Pfades auch an den Eingang des jeweiligen Dämpfungsgliedes gelegt ist und daß die Steuereingänge der Phasendetektoren gemeinsam mit dem Ausgang des Kombinators, der die
   Ausgangssignale der Dämpfungsglieder addiert, verbunden
   sind.


2. Phasenkorrekturschaltung nach Anspruch 1, <u>dadurch gekenn-</u>
   <u>zeichnet,</u> daß die Phasendetektoren (1, 2, 1', 2') und
   Dämpfungsglieder (5, 6, 5', 6') aus Ringmodulatoren bestehen.

0086269
BK 81/54

3. Phasenkorrekturschaltung nach Anspruch 1, dadurch gekennzeichnet, daß den Dämpfungsgliedern (5, 6, 5', 6') Korrekturnetzwerke (15, 16, 15', 16') vorgeschaltet sind, die
die Steuersignale der Dämpfungsglieder so beeinflussen,
daß deren Dämpfungsfaktoren lineare Funktionen der Steuersignale werden.

FIG.1

0086269

FIG.2

| | EINSCHLÄGIGE DOKUMENTE | | EP 82111328.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | <u>DE - B2 - 2 033 017</u> (RAYTHEON)<br><br>* Fig.; Ansprüche 1-3; Spalte 4, Zeile 49 - Spalte 6, Zeile 10 * | 1 | H 04 B 7/08 |
| Y | | 2,3 | |
| | -- | | |
| | OTTO LIMANN "Funktechnik ohne Ballast", 13. Auflage, 1975,<br><br>FRANZIS VERLAG GMBH, München Seiten 236-238, 331, 332 | | |
| Y | * Gesamt * | 2 | |
| Y | * Bild 19.23, Potentiometer R$_4$ * | 3 | |
| | -- | | |
| D,A | <u>DE - B2 - 2 325 367</u> (MARCONI)<br><br>* Fig. 1,3 * | 1 | RECHERCHIERTE SACHGEBIETE (Int. Cl. ³) |
| | ---- | | H 04 B 7/00<br><br>H 03 D 3/00 |

Der vorliegende Recherchenbericht wurde für alle Patentansprüche erstellt.

| Recherchenort | Abschlußdatum der Recherche | Prüfer |
|---|---|---|
| WIEN | 14-04-1983 | DRÖSCHER |